# EUROPÄISCHE PATENTSCHRIFT

(11) **EP 1 223 253 B1**
(45) Veröffentlichungstag und Bekanntmachung des Hinweises auf die Patenterteilung: **22.12.2004**
(21) Anmeldenummer: 02405001.5
(22) Anmeldetag: 04.01.2002
(51) Int. Cl.: E04B 1/348, E03C 1/01, E04B 5/02

(54) **Sanitäre Einrichtung**
Sanitary arrangement
Ensemble sanitaire

(30) Priorität: 08.01.2001 CH 162001
(43) Veröffentlichungstag der Anmeldung: 17.07.2002
(73) Patentinhaber: GEBERIT TECHNIK AG, 8645 Jona (CH)
(72) Erfinder: Gübeli, Albert, 8640 Rapperswil (CH); Christen, Marcel, 8867 Niederurnen (CH); Horvath, Thomas K., 8004 Zürich (CH)
(74) Vertreter: Groner, Manfred

(56) Entgegenhaltungen:
- WO-A-92/06251
- DE-A- 3 805 739
- US-A- 2 644 203
- US-A- 4 457 116
- US-A- 5 265 384
- US-A- 5 787 663

## Beschreibung

Die Erfindung betrifft eine sanitäre Einrichtung nach dem Oberbegriff des Anspruchs 1. Sanitärelemente werden üblicherweise an einer Gebäudewand oder auf einem Boden befestigt. Die Befestigung erfolgt in der Regel mit Schraubverbindungen. Für die Vorwandmontage sind Profilgestelle bekannt, die eine vergleichsweise einfache und schnelle Montage ermöglichen. Für die Befestigung von Sanitärelementen an einem Gebäudeboden können solche Gestelle jedoch nicht verwendet werden. Die Montage von Sanitärelementen, die stehend auf einem Gebäudeboden montiert werden sollen, ist deshalb weiterhin vergleichsweise aufwändig. Seit langem sind deshalb Bestrebungen im Gang, die eine einfachere Bodenbefestigung von Sanitärelementen zum Ziel haben.

Die WO 92/06251 offenbart eine Einrichtung, bei der auf einem Hohlboden sämtliche Elemente einer Nasszelle, einer Küche oder einer Waschküche montiert werden. Der Hohlboden ist entsprechend den Massen des Raumes dimensioniert, in welchem er installiert werden soll. Auf dem Hohlboden sind zudem die Gebäudewände und auch eine Decke installiert. Diese Einrichtung bildet eine Einheit, die bei der Fertigstellung eines Rohbodens mittels eines Kranes auf diesen abgestellt wird. Die Einrichtung hat den Vorteil, dass die Ausgestaltung der Nasszelle, der Küche oder der Waschküche vom Käufer eines Hauses ausgewählt werden kann und die Einrichtung dann entsprechend zusammengestellt und auf die Baustelle transportiert werden kann. Die weiteren Arbeiten in den entsprechenden Räumen sind dann vergleichsweise einfach und können schnell erledigt werden. Eine oft gewünschte individuelle Badgestaltung mit solchen Einheiten ist jedoch begrenzt und spätere Änderungen sind nicht oder nur sehr aufwändig möglich.

Die WO 00/15913 offenbart eine Einrichtung mit Sanitär und/oder Küchenkomponenten, die eine zentrale Aufnahme für Medienanschlüsse aufweist. Diese Aufnahme besitzt eine Adaptereinheit, an welcher mehrere Sanitär- und Küchenkomponenten befestigbar sind. Die Adaptereinheit ist als Fertigelement vorgesehen. Diese Einrichtung hat den Vorteil, dass sie vergleichsweise einfach montierbar ist und dass sie sich insbesondere für Umbauten eignet.

Die US-A-4,457,116 offenbart ein Gebäude in modularer Bauweise, das auf einem Gerüst montiert wird. Das Gebäude besteht aus Räumen, die als Einheiten zusammengefügt werden. Ein als Badezimmer ausgebildeter Raum umfasst eine Toilette, eine Dusche, einen Boiler und eine Raumheizung, eine Türzarge sowie einen Boden und Seitenwände. Für die Entsorgung und die Leitungsanschlüsse ist an der Unterseite des Bodens ein Stutzen angebracht, der bei der Montage des Badezimmers in eine Anschlussöffnung eines Bodenpaneels eingesetzt wird. Die Anordnung der Sanitärelemente im Badezimmer ist fest und hier nicht offenbart.

Die US-A-5,459,966 betrifft eine vorfabrizierte Badezimmerwand und einen vorfabrizierten Unterboden, welcher bereits fest angeordnete Anschlüsse und Leitungen für Sanitärelemente aufweist.

Der Erfindung liegt die Aufgabe zugrunde, eine Einrichtung der genannten Art zu schaffen, die eine noch einfachere Methode ermöglicht, sich insbesondere für Umbauten eignet und individuellen Bedürfnissen anpassbar ist.

Die Aufgabe ist bei einer gattungsgemässen Einrichtung gemäss Anspruch 1 gelöst. Bei der erfindungsgemässen Einrichtung bildet jedes Sanitärelement mit einer zugehörigen Bodenplatte eine Einheit. Dies hat den wesentlichen Vorteil, dass die Sanitärelemente in Vormontage auf den entsprechenden Bodenplatten befestigt und an den Bodenplatten die entsprechenden Befestigungsvorrichtungen sowie Anschlüsse für die Leitungen angebracht werden können. Die Bodenplatten, auf denen jeweils ein Sanitärelement angeordnet ist, sind modular, sodass beliebige Einheiten miteinander kombinierbar sind. Beispielsweise können nebeneinander eine Einheit mit einem Wasserklosett, eine Einheit mit einem Waschtisch sowie eine Einheit mit einer Dusche angeordnet werden. Die Reihenfolge kann beliebig gewählt werden. Ebenfalls in beliebiger Anordnung wäre auch lediglich eine Kombination aus einer Dusche und einem Waschtisch möglich. Durch die modulare Bauweise ist auch eine nachträgliche Ergänzung mit einer Einheit ohne weiteres möglich. Da jede Einheit lediglich aus einem Sanitärelement und einer Bodenplatte besteht, ist der Transport vergleichsweise einfach und kann beispielsweise mittels eines Hubstaplers erfolgen. Die erfindungsgemässe Einrichtung kann aus mehreren oder auch aus lediglich einem Sanitärelement bestehen. Ist gemäss einer Weiterbildung der Erfindung die Bodenplatte am Sanitärelement angeformt, so ergibt sich eine besonders kostengünstig herstellbare und stabile Einrichtung.

Die Bodenplatte ist dabei eine Hohlbodenplatte. Die Leitungen können unterhalb der Bodenplatte verlegt werden. Die Anschlüsse für die Leitungen sind vorzugsweise an der Bodenplatte vormontiert. Bei der Montage auf der Baustelle müssen dann lediglich noch die Leitungen an der Unterseite der Bodenplatte befestigt werden. Denkbar ist auch eine Ausführung, bei welcher die Leitungen bereits in Vormontage an der Bodenplatte befestigt werden. Sind nach einer Weiterbildung der Erfindung die modulare Bodenplatte und die weiteren Bodenplatten auf dasselbe Raster abgestimmt, so ist das nachträgliche Hinzufügen einer Einheit besonders einfach. Ebenfalls ist es ohne grösseren Aufwand möglich, eine Einheit auszutauschen oder später zu entfernen. Eine modulare Bodenplatte einer Einheit entspricht beispielsweise vier üblichen Bodenplatten. Vorzugsweise sind sämtliche Bodenplatten als Hohlbodenplatten ausgebildet.

Weitere vorteilhafte Merkmale ergeben sich aus den abhängigen Patentansprüchen, der nachfolgenden Beschreibung sowie der Zeichnung. Ausführungsbeispiele der erfindungsgemässen Einrichtung werden nachfolgend anhand der Zeichnung näher erläutert. Es zeigen:

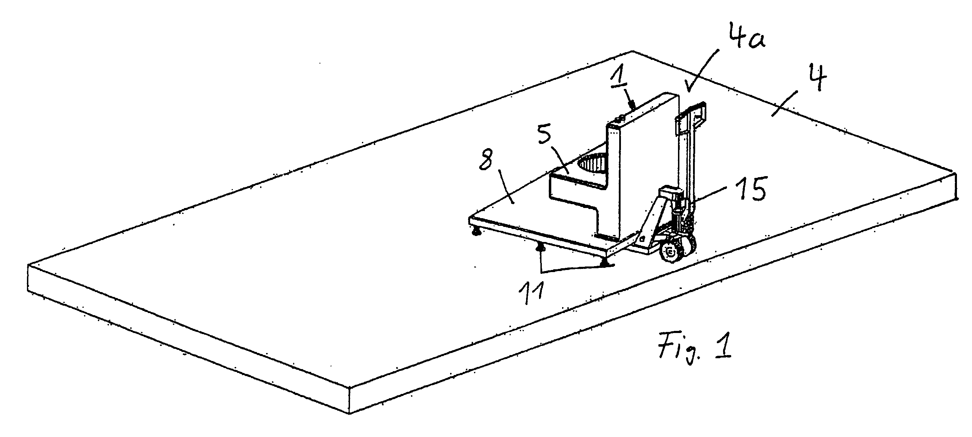

- Fig. 1: schematisch in räumlicher Ansicht ein Gebäudeboden mit einer auf einem Transportfahrzeug angeordneten Einheit,
- Fig. 2: schematisch in räumlicher Ansicht mehrere Einheiten auf einem Gebäudeboden,
- Fig. 3: schematisch eine Anordnung gemäss Fig. 2, jedoch mit vollständig verlegtem Boden,
- Fig. 4: die Anordnung gemäss Fig. 3 mit zusätzlich montierten Stellwänden und Armaturen,
- Fig. 5: schematisch ein Schnitt durch eine montierte Einheit, wobei das Sanitärelement lediglich teilweise dargestellt ist, und
- Fig. 6: schematisch einen Schnitt durch einen Teil einer Variante der erfindungsgemässen Einrichtung.

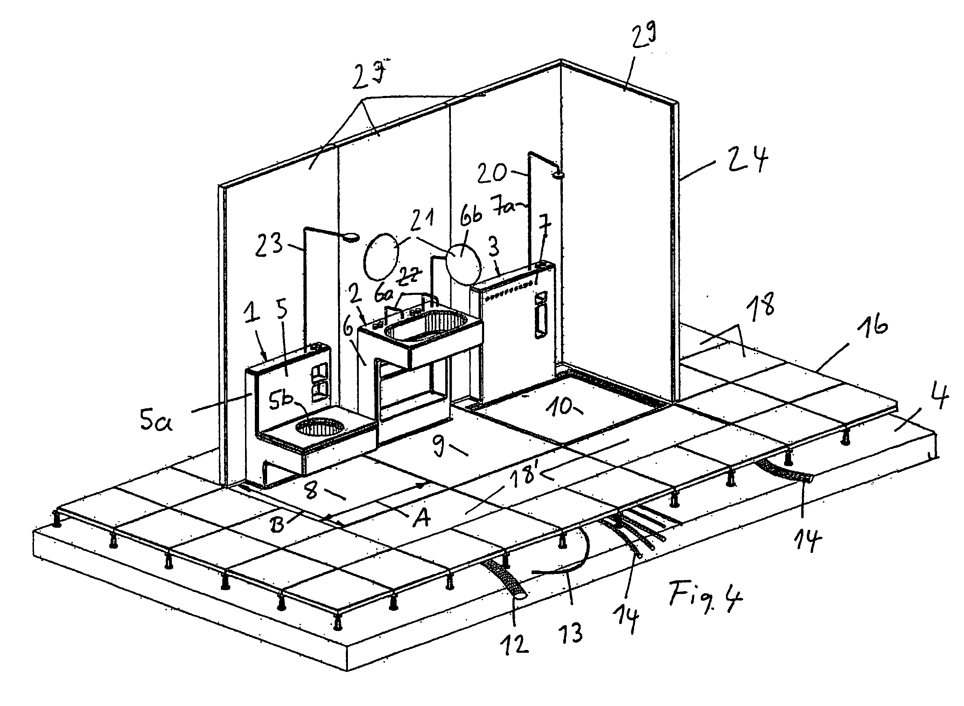

Die Fig. 4 zeigt eine erfindungsgemässe Einrichtung, die eine WC-Einheit 1, eine Waschtischeinheit 2 sowie eine Duscheeinheit 3 aufweist. Jede Einheit 1 bis 3 besteht jeweils aus einem Sanitärelement 5 bis 7 sowie einer Bodenplatte 8 bis 10. Das Sanitärelement 5 weist eine WC-Schüssel 5b sowie ein Rückenteil 5a auf, in dem ein hier nicht gezeigter Spülkasten untergebracht ist. Das Sanitärelement 5 ist auf der Bodenplatte 8 befestigt und bildet mit dieser die Einheit 1. Das Sanitärelement 6 ist ein Waschtisch mit Armaturen 6a sowie einem Spiegel 6b. Dieses Sanitärelement 6 ist auf der Bodenplatte 9 befestigt. Das Sanitärelement 7 bildet mit einem Duscharm 7a eine Dusche und ist auf der Bodenplatte 10 angeordnet, die wie ersichtlich, eine Duschwanne bildet.

Die Bodenplatten 8, 9 und 10 können aus einem an sich beliebigen Material, beispielsweise aus Stein, Kunststoff oder Polymerbeton hergestellt sein. Die Aussendimensionen dieser Bodenplatten 8, 9 und 10 sind gleich, beispielsweise Quadrate mit gleichen Seiten A und B. Die Seiten A und B können jedoch auch unterschiedlich sein. Beispielsweise betragen die Masse A und B 120 cm. Unterseitig sind an den Platten 8 bis 10 jeweils mehrere Ständer 11 befestigt, die vorzugsweise höhenverstellbar sind. Auf diesen Ständern 11 sind die Bodenplatten 8 bis 10 jeweils auf einen Gebäudeboden 4 abgestellt, der ein Rohboden oder ein Fertigboden sein kann. Durch Verstellen der Ständer 11 können die Bodenplatten 8 bis 10 jeweils genau nivelliert werden. Unebenheiten des Gebäudebodens 4 können somit durch Verstellen der Ständer 11 ausgeglichen werden.

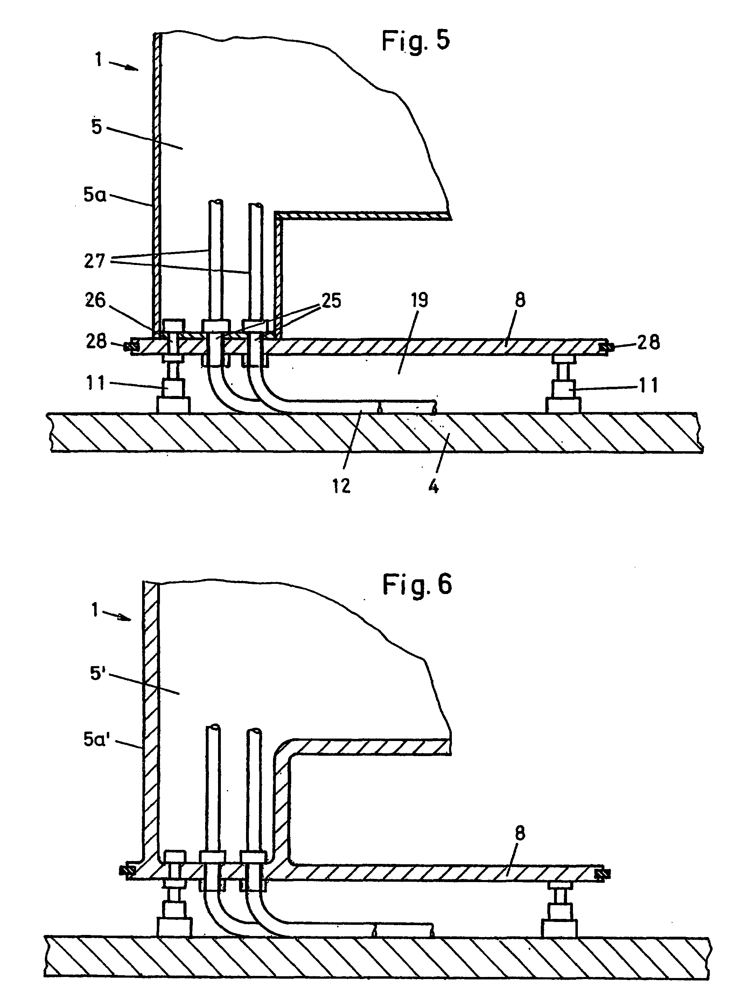

Die Sanitärelemente 5, 6 und 7 sind jeweils gemäss Fig. 5 mit Befestigungsvorrichtungen 26 an der entsprechenden Bodenplatte 8, 9 oder 10 befestigt. Die Befestigungsvorrichtungen 26 sind beispielsweise Schraubverbindungen, denkbar sind aber auch andere Verbindungsmittel, wie beispielsweise Steck- oder Rastverbindungen. Diese Verbindungsvorrichtungen 26 sind vorzugsweise lösbar.

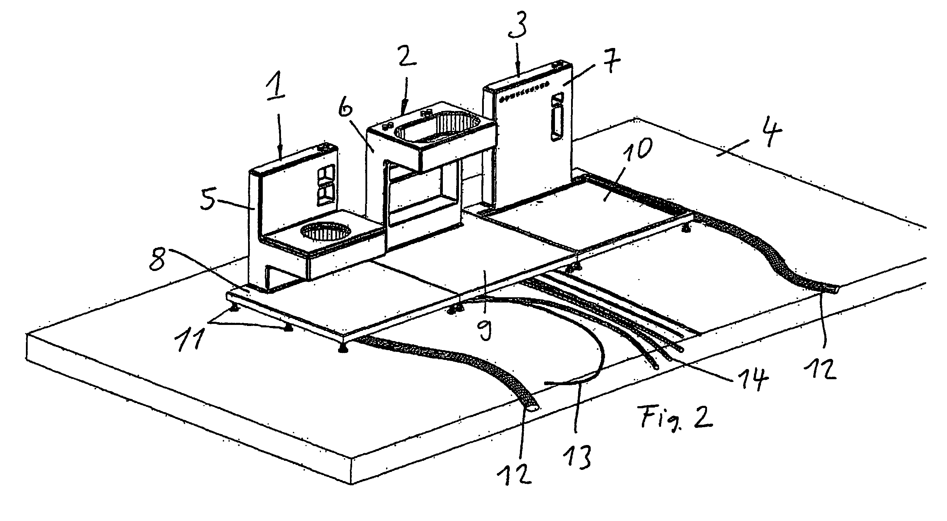

Die Körper 5a (Fig. 5) der Sanitärelemente 5, 6 und 7 bestehen vorzugsweise aus einem geeigneten Polymerbeton. Die hier nicht gezeigten Apparate, beispielsweise ein Spülkasten sowie Leitungsteile 27 können eingegossen sein. Die Körper 5a können aber auch aus einem anderen Material, beispielsweise aus Keramik oder Kunststoff bestehen. Wie die Fig. 5 zeigt, sind die Leitungsteile 27 jeweils an der Bodenplatte 8, 9 oder 10 mittels Anschlussvorrichtungen 25, beispielsweise Anschlussfittings an die erforderlichen Leitungen 12 bis 14 (Fig. 2) angeschlossen. Diese Leitungen 12 bis 14 sind an sich übliche Leitungen für die Versorgung und Entsorgung der Sanitärelemente 5 bis 7. Die Leitungen 12 sind hier beispielsweise Entsorgungsleitungen und die Leitungen 14 Druckleitungen für die Wasserversorgung. Die Leitungen 13 sind elektrische Leitungen. Jedes der Sanitärelemente 5 bis 7 ist an die entsprechenden Leitungen 12 bis 14 angeschlossen und die entsprechenden Bodenplatten 8 bis 10 sind mit den entsprechenden Anschlussvorrichtungen versehen. Die Waschtischeinheit 2 ist beispielsweise an eine elektrische Leitung 13, eine Druckleitung 14 für die Zufuhr von Waschwasser sowie an eine Ablaufleitung 12 für die Entsorgung des ablaufenden Wassers angeschlossen. Die Anschlussvorrichtungen 25 sind vorzugsweise vormontiert. An der Unterseite der Bodenplatten 8 bis 10 können auch andere Teile, beispielsweise Fallleitungen oder Geruchsverschlüsse vormontiert sein.

Die Platten 8 bis 10 bilden gemäss Fig. 4 einen Teil eines Hohlbodens 16, der in einem vorbestimmten Raster mit weiteren Bodenplatten 18 versehen ist. Diese Platten 18 sind vorzugsweise ebenfalls Hohlbodenplatten und mit Ständern 11 versehen. Diese Bodenplatten 16 sind vorzugsweise wie die Bodenplatten 8 bis 10 rechteckig und insbesondere quadratisch. Weitere Bodenplatten 18' fügen sich ins gleiche Raster ein und entsprechen jeweils der Fläche von zwei Bodenplatten 18. Die Bodenplatten 8 bis 10, 18 und 18' bilden somit den geschlossenen Boden 16. Diese Bodenplatten sind aneinander stossend montiert. Damit der Boden 16 wasserdicht ist, weisen die Bodenplatten 8 bis 10 gemäss Fig. 5 an ihren Rändern Dichtungsmittel 28, insbesondere Profile aus einem gummielastischen Material auf. Mit ähnlichen Dichtungsmitteln 28 sind die Bodenplatten 18 und 18' versehen.

Nachfolgend wird die Montage einer sanitären Einrichtung gemäss der Erfindung erläutert.

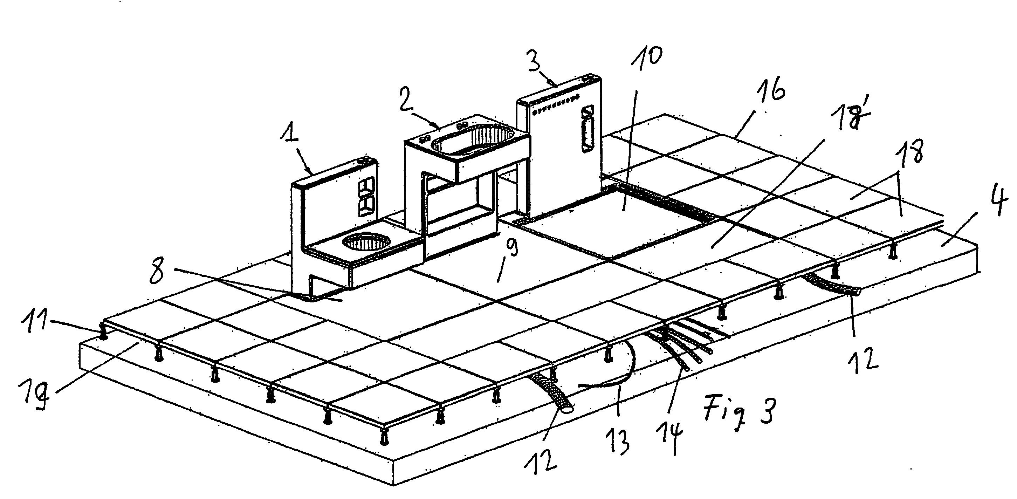

Ist der Gebäudeboden 4 erstellt, so werden die Einheiten 1, 2 und 3 jeweils einzeln auf einem Hubstapler 15 oder auch von Hand in der vorgesehenen Position auf den Gebäudeboden transportiert und auf die Oberseite 4a abgestellt. An der Unterseite der entsprechenden Bodenplatte 8, 9 bzw. 10 werden die entsprechenden Leitungen 12 bis 14 angeschlossen und verlegt. Die Fig. 2 zeigt die drei Einheiten 1, 2 und 3, die auf den Gebäudeboden 4 abgestellt und an die Leitungen 12 bis 14 angeschlossen sind. Sie sind wie ersichtlich aneinander gestossen und aufgrund der oben erwähnten Dichtungsmittel 28 gegeneinander abgedichtet. Als nächstes werden die Bodenplatten 18 und 18' verlegt und gegeneinander sowie an die Bodenplatten 8 bis 10 angestossen, bis der Boden 16 vollständig ist. Die Fig. 3 zeigt einen solchen vollständigen Boden 16. Nun werden die Einheiten 1, 2 und 3 mit erforderlichen Armaturen, beispielsweise einer Lampe 23, Wasserarmaturen 6a und einem Duscharm 7a versehen. Schliesslich können noch gemäss Fig. 4 Trennwände 29 montiert werden. Diese Trennwände 29 bilden vorzugsweise ebenfalls modulare Platten entsprechend dem Raster des Bodens 16.

Die Fig. 6 zeigt ein Sanitärelement 5' mit einem Körper 5'a an dem eine Bodenplatte 8' angeformt ist. Der Körper 5' bildet somit mit der Bodenplatte 8' eine feste Einheit und ist beispielsweise aus Keramik, Kunststoff oder Polymerbeton hergestellt. Dieses Sanitärelement 5' ist besonders kompakt und kostengünstig herstellbar.

## Patentansprüche

1. Sanitäre Einrichtung für ein Gebäude, mit wenigstens einem Sanitärelement (5 bis 7), nämlich einem WC (5) oder einem Waschtisch (6) oder einer Dusche (7), mit einem Boden (16) sowie Leitungen (12 bis 14) für die Versorgung und Entsorgung des wenigstens einen Sanitärelementes (5 bis 7), **dadurch gekennzeichnet, dass** der Boden aus modularen Bodenplatten (8 bis 10, 18) besteht, wobei an der Unterseite des wenigstens einen Sanitärelementes (5 bis 7) eine der modularen Bodenplatten (8 bis 10) befestigt ist und diese mit dem Sanitärelement (5 bis 7) eine Einheit bildet, wobei die Bodenplatte (8 bis 10) Anschlussmittel (25) zum Anschliessen der Leitungen (12 bis 14) aufweist und wobei die Bodenplatte (8 bis 10) der genannten Einheit (1 bis 3) mit weiteren Bodenplatten (18) des Bodens (16) aneinander stossend montierbar ist, wobei die Bodenplatte (8 bis 10) eine Hohlbodenplatte ist.

2. Einrichtung nach Anspruch 1, **dadurch gekennzeichnet, dass** die modulare Bodenplatte (8 bis 10) der genannten Einheit (1 bis 3) und die weiteren Bodenplatten (18, 18') auf dasselbe Raster abgestimmt sind.

3. Einrichtung nach Anspruch 1 oder 2, **dadurch gekennzeichnet, dass** die modulare Bodenplatte (8 bis 10) an ihrer Unterseite mit nivellierbaren Ständern (11) versehen ist.

4. Einrichtung nach Anspruch 1, **dadurch gekennzeichnet, dass** die Anschlussmittel (25) an der Unterseite der modularen Bodenplatte (8 bis 10) angeordnet sind.

5. Einrichtung nach einem der Ansprüche 1 bis 4, **dadurch gekennzeichnet, dass** die Sanitärelemente (5 bis 7) auf einem Ständersystem angeordnet sind.

6. Einrichtung nach einem der Ansprüche 1 bis 5, **dadurch gekennzeichnet, dass** die Sanitärelemente (5 bis 7) als Fertigbauteile mit einer Fertigoberfläche ausgeführt sind.

7. Einrichtung nach einem der Ansprüche 1 bis 6, **dadurch gekennzeichnet, dass** die Sanitärelemente (5 bis 7) aus Polymer beton hergestellt sind.

8. Einrichtung nach einem der Ansprüche 1 bis 7, **dadurch gekennzeichnet, dass** die Medienleitungen (12, 14) zu einem zentralen Zugang oder Abgang geführt wird.

9. Einrichtung nach einem der Ansprüche 1 bis 8, **dadurch gekennzeichnet, dass** die modularen Bodenplatte (8 bis 10) an ihrem Rand jeweils mit einem Dichtungsmittel (28) versehen sind, mit dem angrenzende Bodenplatten (8 bis 10) gegeneinander abgedichtet sind.

10. Einrichtung nach einem der Ansprüche 1 bis 9, **dadurch gekennzeichnet, dass** die Bodenplatte (8') am Sanitärelement (5') angeformt ist.

## Claims

1. Sanitary arrangement for a building, having at least one sanitary element (5 to 7), namely a WC (5) or a washbasin (6) or a shower (7), having a floor (16) and having lines (12 to 14) for supply to, and disposal from, the at least one sanitary element (5 to 7), **characterized in that** the floor comprises modular floor panels (8 to 10, 18), it being the case that one of the modular floor panels (8 to 10) is fastened on the underside of the at least one sanitary element (5 to 7) and forms a unit with the sanitary element (5 to 7), that the floor panel (8 to 10) has connection means (25) for connecting the lines (12 to 14), and that the floor panel (8 to 10) of the abovementioned unit (1 to 3) can be installed with further floor panels (18) of the floor (16) such that they butt against one another, the floor panel (8 to 10) being a hollow floor panel.

2. Arrangement according to Claim 1, **characterized in that** the modular floor panel (8 to 10) of the abovementioned unit (1 to 3) and the rest of the floor panels (18, 18') are coordinated with the same unit dimensions.

3. Arrangement according to Claim 1 or 2, **characterized in that** the modular floor panel (8 to 10) is provided, on its underside, with supports (11) which can be made level.

4. Arrangement according to Claim 1, **characterized in that** the connection means (25) are arranged on the underside of the modular floor panel (8 to 10).

5. Arrangement according to one of Claims 1 to 4, **characterized in that** the sanitary elements (5 to 7) are arranged on a support system.

6. Arrangement according to one of Claims 1 to 5, **characterized in that** the sanitary elements (5 to 7) are configured as prefabricated compound units with a prefabricated surface.

7. Arrangement according to one of Claims 1 to 6, **characterized in that** the sanitary elements (5 to 7) are produced from polymer concrete.

8. Arrangement according to one of Claims 1 to 7, **characterized in that** the media lines (12, 14) are led to a central inlet or outlet.

9. Arrangement according to one of Claims 1 to 8, **characterized in that** the modular floor panel (8 to 10) is provided, on its periphery in each case, with a sealing means (28), which seals the adjacent floor panels (8 to 10) in relation to one another.

10. Arrangement according to one of Claims 1 to 9, **characterized in that** the floor panel (8') is integrally formed on the sanitary element (5').

## Revendications

1. Ensemble sanitaire pour un bâtiment, comprenant au moins un élément sanitaire (5 à 7), à savoir un WC (5) ou un lavabo (6) ou une douche (7), comprenant un sol (16) ainsi que des canalisations (12 à 14) pour l'alimentation et l'évacuation de l'au moins un élément sanitaire (5 à 7), **caractérisé en ce que** le sol se compose de plaques de sol modulaires (8 à 10, 18), l'une des plaques de sol modulaires (8 à 10) étant fixée sur le côté inférieur de l'au moins un élément sanitaire (5 à 7) et celle-ci formant avec l'élément sanitaire (5 à 7) une unité, la plaque de sol (8 à 10) présentant des moyens de raccordement (25) pour le raccordement des canalisations (12 à 14) et la plaque de sol (8 à 10) de ladite unité (1 à 3) pouvant être montée avec d'autres plaques de sol (18) du sol (16) bout à bout, la plaque de sol (8 à 10) étant une plaque de sol creuse.

2. Ensemble selon la revendication 1, **caractérisé en ce que** la plaque de sol modulaire (8 à 10) de ladite unité (1 à 3) et les autres plaques de sol (18, 18') sont adaptées au même quadrillage.

3. Ensemble selon la revendication 1 ou 2, **caractérisé en ce que** la plaque de sol modulaire (8 à 10) est pourvue sur son côté inférieur de pieds (11) pouvant être mis à niveau.

4. Ensemble selon la revendication 1, **caractérisé en ce que** les moyens de raccordement (25) sont disposés au niveau du côté inférieur de la plaque de sol modulaire (8 à 10).

5. Ensemble selon l'une quelconque des revendications 1 à 4, **caractérisé en ce que** les éléments sanitaires (5 à 7) sont disposés sur un système de pieds.

6. Ensemble selon l'une quelconque des revendications 1 à 5, **caractérisé en ce que** les éléments sanitaires (5 à 7) sont réalisés sous forme de composants finis avec une surface finie.

7. Ensemble selon l'une quelconque des revendications 1 à 6, **caractérisé en ce que** les éléments sanitaires (5 à 7) sont fabriqués en béton polymère.

8. Ensemble selon l'une quelconque des revendications 1 à 7, **caractérisé en ce que** les canalisations de fluides (12, 14) sont guidées vers une entrée ou une sortie centrale.

9. Ensemble selon l'une quelconque des revendications 1 à 8, **caractérisé en ce que** les plaques de sol modulaires (8 à 10) sont pourvues sur leur bord d'un moyen de joint d'étanchéité respectif (28), avec lequel les plaques de sol adjacentes (8 à 10) sont rendues étanches les unes contres les autres.

10. Ensemble selon l'une quelconque des revendications 1 à 9, **caractérisé en ce que** la plaque de sol (8') est formée sur l'élément sanitaire (5').
